# EUROPÄISCHE PATENTSCHRIFT

(11) **EP 0 513 428 B1**
(45) Veröffentlichungstag und Bekanntmachung des Hinweises auf die Patenterteilung: **22.03.1995**
(21) Anmeldenummer: 91109214.6
(22) Anmeldetag: 06.06.1991
(51) Int. Cl.: B01J 4/00, F04F 1/12

(54) **Verfahren zur Förderung von Chemikalienlösungen in der Halbleiterindustrie sowie Anlage zur Durchführung des Verfahrens**
Process for transporting solutions of chemicals in semi-conductor industry and installation for carrying out the process
Procédé pour le transport de solutions de produits chimiques dans l'industrie semi-conducteur et installation pour la mise en oeuvre dudit procédé.

(30) Priorität: 16.05.1991 DE 4115933
(43) Veröffentlichungstag der Anmeldung: 19.11.1992
(73) Patentinhaber: Uhde GmbH, 44141 Dortmund (DE)
(72) Erfinder: van den Bossche, André, W-4760 Werl (DE)
(74) Vertreter: Patentanwälte Meinke, Dabringhaus und Partner

(56) Entgegenhaltungen:
- GB-A- 2 220 710
- JAHRESTAGUNG KERNTECHNIK 1989,TAGUNGSBERICHT Mai 1989, DUSSELDORF Seiten 391 - 394 H.M. SHAW, "The use of power fluidics technology in nuclear chemical plants"

## Beschreibung

Die Erfindung betrifft ein Verfahren zur Förderung von Chemikalienlösungen in der Halbleiterindustrie, aus Vorratsbehältern zum jeweiligen Einsatzort mit Pumpen und Ventilen und eine Anlage zur Durchführung des Verfahrens mit einem Chemikalienvorratsbehälter zum Anschluß an ein Leitungsnetz mit darin angeordneten Pumpen und Ventilen.

In den letzten Jahren hat sich die erforderliche Qualität der Chemikalien für die Halbleiterindustrie und anverwandte Industrien, insbesondere im Hinblick auf Partikelfreiheit und niedrige ionische Konzentrationen, drastisch verbessert. Mit den steigenden Anforderungen an die Chemikalienqualität hat sich auch das Konzept der Chemikalienversorgung in den Fertigungslinien für die Halbleiter geändert.

Anstelle der Versorgung mit Flaschen ist die zentrale, halbautomatische Versorgung aus Containern getreten. Zur Förderung der Chemikalien zum jeweiligen Verbrauchen bzw. Einsatzort haben sich Pumpsysteme und Systeme zur Druckförderung durchgesetzt. Diese Pumpsysteme sind vielseitig und erlauben interne Umwälzfiltration, um den spezifizierten Partikelwert zu erreichen. Die Förderung bis zum Einsatzort erfordert Armaturen bzw. sonstige Absperrorgane.

Derzeit werden Einfach- oder Doppelmembranpumpen bzw. Einfach- oder Doppelfaltenbalgpumpen sowie als Armaturen Membranventile oder Faltenbalgventile eingesetzt. Nachteilig ist bei diesen Einrichtungen jedoch, daß sie im Betrieb durch Reibung und Verformung Partikel erzeugen, die sich vom Material lösen und die Chemikalienlösung verunreinigen. Durch Filtrierung kann diese Kontamination zwar in Grenzen gehalten werden, der Aufwand ist zum Teil aber sehr groß bzw. nicht immer erfolgreich.

Aufgabe der Erfindung ist die Schaffung einer Lösung, mit der die Chemikalienlösung aus dem transportablen Vorratsbehälter auf möglichst einfache Weise schonend zum jeweiligen Einsatzort gefördert werden kann, so daß die Chemikalienlösung den Einsatzort ohne durch die Förderung bedingte Verunreinigungen erreicht.

Diese Aufgabe wird mit einem Verfahren der eingangs bezeichneten Art erfindungsgemäß dadurch gelöst, daß die Chemikalienlösung mit strömungsmechanisch kraftbetriebenen Pumpen und Ventilen zum jeweiligen Einsatzort befördert wird, wobei wenigstens zwei hintereinander jeweils in je einem Festtank angeordnete strömungsmechanisch kraftbetriebene Pumpen mit zwischengeschaltetem strömungsmechanisch kraftbetriebenen Ventil eingesetzt werden.

Mit diesem Verfahren ist es möglich, die Chemikalienlösung auf einfache Weise ohne Erzeugung von Verunreinigungen zum jeweiligen Einsatzort zu befördern. Da die strömungsmechanisch kraftbetriebenen Pumpen und Ventile keine beweglichen Teile aufweisen, entsteht keine Reibung bzw. Verformung, so daß sich keine Partikel bilden können, welche die Chemikalien verunreinigen könnten.

Derartige strömungsmechanisch kraftbetriebene Pumpen und Ventile sind an sich aus der Kerntechnik bekannt (z.B. Jahrestagung Kerntechnik 1989, 09. bis 11. Mai 1989 in Düsseldorf, Tagungsbericht, The use of power fluidics technology in nuclear chemical plants, H.M. Shaw). In der Kerntechnik dienen diese Einrichtungen dazu, den Aufwand an direkter oder indirekter Instandhaltung zu minimieren, um das Strahlenrisiko des Betriebspersonals zu verringern.

Gemäß der Erfindung ist es vorgesehen, daß wenigstens zwei hintereinander jeweils in je einem Festtank angeordnete strömungsmechanisch kraftbetriebene Pumpen mit zwischengeschaltetem strömungsmechanisch kraftbetriebenem Ventil eingesetzt werden.

Dies hat den Vorteil, daß durch die wenigstens zwei Festtanks mit jeweiliger strömungsmechanisch kraftbetriebener Pumpe (insbesondere Diodenpumpe) ein Puffer für die Chemikalienlösung zur Verfügung steht, wenn beispielsweise am jeweiligen Einsatzort gerade keine Chemikalienlösung benötigt wird.

Zur Lösung der Aufgabe sieht die Erfindung auch eine Anlage zur Durchführung des Verfahrens mit einem Chemikalienvorratsbehälter zum Anschluß an ein Leitungsnetz mit darin angeordneten Pumpen und Ventilen vor, die sich dadurch auszeichnet, daß im Leitungsnetz strömungsmechanisch kraftbetriebene Pumpen und Ventile angeordnet sind wobei wenigstens zwei jeweils innerhalb je eines Festtanks angeordnete Diodenpumpen mit zwischen den beiden Festtanks angeordnetem strömungsmechanisch kraftbetriebenem Ventil vorgesehen sind.

Bei dieser Anlage werden keine mechanischen Pumpen und Ventile benötigt, sondern lediglich strömungsmechanisch kraftbetriebene Einrichtungen (power fluidics), die keine beweglichen Teile aufweisen. Dadurch kann keine Reibung oder dgl. entstehen, so daß eine Verunreinigung der Chemikalienlösung bei der Förderung ausgeschlossen ist.

Die Anlage hat den weiteren Vorteil, daß die Chemikalienlösung aus dem ersten Festtank entweder in den zweiten Festtank oder in den ersten zurückgefördert werden kann, d.h. der erste Festtank auch als Puffer dienen kann.

Dabei ist zweckmäßig zusätzlich vorgesehen, daß hinter dem letzten Festtank vor dem jeweiligen Einsatzort ein strömungsmechanisch kraftbetriebenes Ventil angeordnet ist. Bei dieser Ausbildung kann die Chemikalienlösung dann aus dem letzten Festtank entweder zum Einsatzort oder zurück in den letzten Festtank gefördert werden, wenn am Einsatzort gerade keine Chemikalien abgenommen werden.

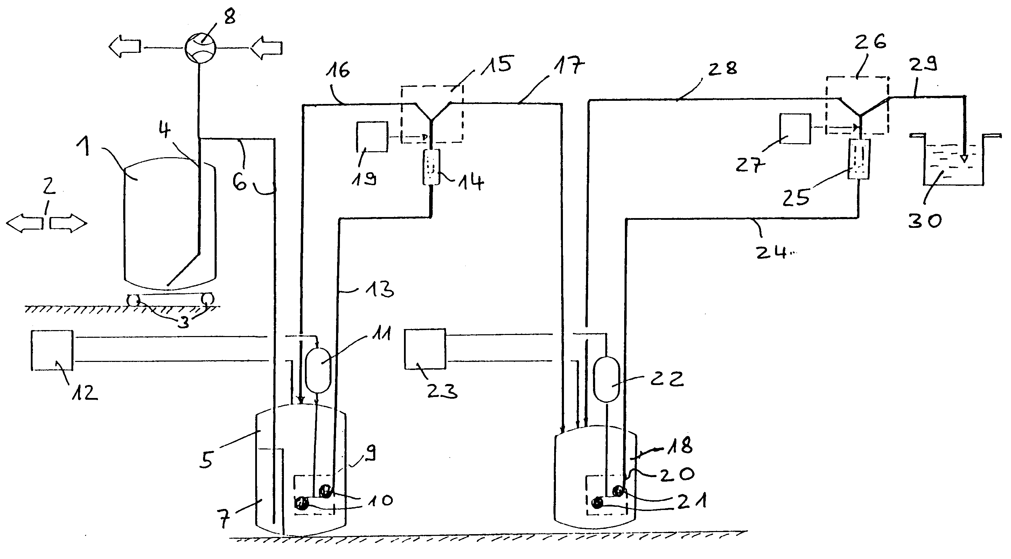

Die Erfindung ist nachstehend anhand der Zeichnung beispielsweise näher erläutert. Diese zeigt in der einzigen Figur ein Verfahrensfließbild einer erfindungsgemäßen Anlage.

Von der Anlage ist zunächst ein transportabler Chemikalienvorratsbehälter 1 dargestellt, dessen Transportmöglichkeit durch ein Doppelpfeil 2 sowie Fahrrollen 3 angedeutet ist. Der Behälter 1 ist mittels eines geeigneten Förderfahrzeuges verschiebbar und an einer Anschlußvorrichtung der Anlage anschließbar, die mit 4 bezeichnet ist.

Unterhalb des Behälters 1 ist ein erster Festtank 5 angeordnet, in den eine als Siphon ausgebildete Leitung 6 von der Anschlußvorrichtung 4 geführt ist. Dabei mündet die Leitung 6 in eine separate Kammer 7 des Festtanks 5, so daß eine Untertauchung und damit die Siphonwirkung immer gewährleistet ist. Die Siphon-Förderung kann mittels eines Luftstrahles gestartet werden, eine entsprechende Pumpe ist mit 8 bezeichnet.

Im Festtank 5 ist eine strömungsmechanisch kraftbetriebene Pumpe angeordnet, und zwar eine Diodenpumpe 9. Diese Diodenpumpe weist zwei sogenannte Dioden 10 auf, die gemeinsam die Pumpe bilden. Die Pumpe 9 wird zyklisch angetrieben, bevorzugt mit Stickstoff unter Druck. Dabei erfolgt die Zugabe über einen Pufferbehälter 11, der mit einer entsprechenden Kontrolleinrichtung 12 verbunden ist.

Die beiden Dioden 10 arbeiten wie zwei undichte Rückschlagarmaturen, die gegeneinander angeordnet sind. In der einen Richtung fließt die Chemikalenlösung über eine Düse durch die axiale Öffnung in der Diodenkammer und verläßt die Diodenkammer tangential. Der Austritt ist ebenfalls als Düse ausgebildet. In der anderen Richtung wird die Chemikalienlösung aufgrund der Dioden-Anordnung so umgelenkt, daß ein sehr hoher Druckverlust entsteht und kaum Flüssigkeit fließt.

Durch den zyklischen Druckimpuls zwischen beiden nebeneinander angeordneten Dioden 9 entsteht die Pumpförderung, die Chemikalienlösung wird über eine Leitung 13 aus dem ersten Festtank 5 hinaus über einen Filter 14 in ein strömungsmechanisch kraftbetriebenes Ventil 15 gepumpt. In diesem Ventil sind zwei Ausgänge vorgesehen, eine Rückführleitung 16, über die die Chemikalienlösung in den ersten Festtank 5 zurückgeführt werden kann, und eine Leitung 17 zum zweiten Festtank 18.

Das strömungsmechanisch kraftbetriebene Ventil 15 ist mit einer Kontrolleinrichtung 19 versehen und funktioniert folgendermaßen:
Ein Flüssigkeitsstrom, der aus einer Düse strömt, reißt das Medium in der Umgebung mit. Damit wird der Flüssigkeitsstrahl vergrößert und die Geschwindigkeit abgebremst. Am Außenrand des Strahles entsteht ein Vacuum. Bei entsprechender Konstruktion der Austrittsöffnung legt sich der Strahl an den Wänden an. Durch Druckerhöhung an einer Seite der Wand wird das Vacuum dort gebrochen und der Strahl legt sich auf die andere Seite. Dieser Effekt wird ausgenutzt, um eine Weiche zu bauen, wobei durch einfache Druckerhöhung auf der einen oder der anderen Seite die gewünschte Fließrichtung gewählt werden kann.

Im zweiten Festtank 18 ist ebenfalls eine strömungsmechanisch kraftbetriebene Diodenpumpe 20 angeordnet mit zwei Dioden 21. Der Raum zwischen den beiden Dioden 21 wird von einem unter Druck stehenden Gas, insbesondere Stickstoff, (Vorrat) 22 zyklisch beaufschlagt. Die Pumpe sowie der Vorrat sind ebenfalls mit einer Kontrolleinrichtung 23 verbunden.

Aus dem zweiten Festtank führt eine Leitung 24, die über einen Filter 25 in ein zweites strömungsmechanisch kraftbetriebenes Ventil 26 mit Kontrolleinrichtung 27 mündet. Auch aus diesem Ventil sind zwei Ausgänge möglich, einer in eine Rücklaufleitung 28 zur Rückführung in den zweiten Festtank 18 und einer in einer Leitung 29, welche zum Einsatzort 30 führt.

Als Material für die eingesetzten Pumpen 9, 20 und Ventile 15, 26 wird für organische Lösungsmittel austenitisches Edelstahl eingesetzt, für anorganische Säuren- und Laugen Fluorpolymere.

Die Chemikalienlösung wird somit aus dem Transportvorratsbehälter 1 zum jeweiligen Einsatzort 30 ohne Verunreinigung allein durch strömungsmechanisch kraftbetriebene Pumpen 9, 20 sowie Ventile 15, 26 gefördert. Wird am Einsatzort 30 zeitweise keine Chemikalienlösung benötigt, so kann die Anlage im Kreis laufen, in dem die Ventile 15 bzw. 26 entsprechend auf Rückführung eingestellt werden.

Natürlich ist die Erfindung nicht auf das in der Zeichnung dargestellte Ausführungsbeispiel beschränkt. Weitere Ausgestaltungen der Erfindung sind möglich, ohne den Grundgedanken, wie in den Ansprüchen definiert, zu verlassen. Wesentlich ist jedoch, daß nur strömungsmechanisch kraftbetriebene Pumpen und Armaturen verwandt werden.

## Patentansprüche

1. Verfahren zur Förderung von Chemikalienlösungen in der Halbleiterindustrie aus Vorratsbehältern zum jeweiligen Einsatzort mit Pumpen und Ventilen,
dadurch gekennzeichnet,
daß die Chemikalienlösung mit strömungsmechanisch kraftbetriebenen Pumpen und Ventilen zum jeweiligen Einsatzort befördert wird, wobei wenigstens zwei hintereinander jeweils in je einem Festtank angeordnete strömungsmechanisch kraftbetriebene Pumpen mit zwischengeschaltetem strömungsmechanisch kraftbetriebenen Ventil eingesetzt werden.

2. Anlage zur Durchführung des Verfahrens nach Anspruch 1, mit einem Chemikalienvorratsbehälter zum Anschluß an ein Leitungsnetz mit darin angeordneten Pumpen und Ventilen,
dadurch gekennzeichnet,
daß im Leitungsnetz strömungsmechanisch kraftbetriebene Pumpen (9,20) und Ventile (15,26) angeordnet sind, wobei wenigstens zwei hintereinander jeweils in einem Festtank (5,18) angeordnete strömungsmechanisch kraftbetriebene Pumpen (9,20) mit zwischengeschaltetem strömungsmechanisch kraftbetriebenen Ventil (15) vorgesehen sind.

3. Anlage nach Anspruch 2,
dadurch gekennzeichnet,
daß die jeweils innerhalb je eines Festtanks (15,18) angeordneten strömungsmechanisch kraftbetriebenen Pumpen als Diodenpumpen (9,20) ausgebildet sind.

4. Anlage nach Anspruch 2 oder 3,
dadurch gekennzeichnet,
daß hinter dem letzten Festtank (18) vor dem jeweiligen Einsatzort (30) ein strömungsmechanisch kraftbetriebenes Ventil (26) angeordnet ist.

## Claims

1. Process for delivering solutions of chemicals in the semi-conductor industry from storage containers to the current point of use using pumps and valves,
characterised in that,
the chemical solution is delivered to the current point of use using power fluidic pumps and valves, at least two power fluidic pumps being arranged in series, each in a respective fixed tank, with the interposition of power fluidic valve.

2. Installation for carrying out the process according to claim 1,with a reservoir container for chemicals for connecting to a pipework system with pumps and valves arranged in it,
characterised in that,
in the pipework system power fluidic pumps (9, 20) and valves (15, 26) are arranged, at least two power fluidic pumps (9, 20) being arranged in series in respective fixed tanks (5, 18) with the interposition of power fluidic valve (15).

3. Installation according to claim 2,
characterised in that,
the power fluidic pumps each arranged within a respective fixed tank (15, 18) are in the form of diode pumps (9, 20).

4. Installation according to claim 2 or 3,
characterised in that,
a power fluidic valve (26) is arranged following the last tank (18) and ahead of the current point of use (30).

## Revendications

1. Procédé pour le transport de solutions de produits chimiques dans l'industrie des semi-conducteurs à partir de réservoirs de stockage à destination de différents lieux d'utilisation à l'aide de pompes et de soupapes,
caractérisé en ce que
la solution de produits chimiques est acheminée vers le lieu d'utilisation respectif à l'aide de pompes et soupapes actionnées par la mécanique des fluides, avec au moins deux pompes entraînées par la mécanique des fluides et disposées en séries respectivement dans une cuve fixe en intercalant une soupape entraînée par la mécanique des fluides.

2. Installation pour réaliser le procédé selon la revendication 1, avec un réservoir de produit chimique pour le raccordement sur un réseau de canalisations avec les pompes et soupapes montées dans celui-ci,
caractérisée en ce que
des pompes (9, 20) et soupapes (15, 26) actionnées par la mécanique des fluides sont disposées dans le réseau de canalisations, avec au moins deux pompes (9, 20) montées en séries respectivement dans une cuve fixe (5, 18), entraînées par la mécanique des fluides, en intercalant une soupape (15) entraînée par la mécanique des fluides.

3. Installation selon la revendication 2,
caractérisée en ce que
les pompes entraînées par la mécanique des fluides, montées respectivement à l'intérieur de chacune des cuves fixes (15, 18) sont conçues comme pompes à diodes (9, 20).

4. Installation selon la revendication 2 ou 3,
caractérisée en ce que
derrière la dernière cuve fixe (18) sur le lieu d'utilisation respectif (30) est disposée une soupape (26) actionnée par la mécanique des fluides.
